# EUROPÄISCHE PATENTSCHRIFT

(11) **EP 1 339 525 B1**
(45) Veröffentlichungstag und Bekanntmachung des Hinweises auf die Patenterteilung: **28.01.2009**
(21) Anmeldenummer: 01984790.4
(22) Anmeldetag: 30.11.2001
(51) Int. Cl.: B23K 35/38, B23K 26/12

(54) **Verwendung eines Prozessgases zum Laserschweissen**
Use of a process gas for laser welding
Utilisation d'un gas de processus pour le soudage laser

(30) Priorität: 30.11.2000 DE 10059529; 30.11.2000 DE 10059528; 18.12.2000 DE 10063166; 18.12.2000 DE 10063165
(43) Veröffentlichungstag der Anmeldung: 03.09.2003
(73) Patentinhaber: Linde Aktiengesellschaft, 80807 München (DE)
(72) Erfinder: HERRMANN, Johann, 85716 Unterschleissheim (DE)
(74) Vertreter: Gellner, Bernd
(86) Internationale Anmeldenummer: PCT/EP2001/014008
(87) Internationale Veröffentlichungsnummer: WO 2002/043918

(56) Entgegenhaltungen:
- EP-A- 0 527 229
- EP-A- 0 579 205
- US-A- 3 824 368
- US-A- 3 939 323
- US-A- 4 000 392
- DANZER W ET AL: "LASER IM NEBEL" LASER, VULKAN VERLAG, ESSEN, DE, Nr. 1, 1987, Seiten 32-36, XP000889900 ISSN: 0934-7755 in der Anmeldung erwähnt
- EG-SICHERHEITSDATENBLATT GEMÄSS TRGS 220 - AIR LIQUIDE, 24. Januar 2002 (2002-01-24), Seiten 1-2, INTERNET

## Beschreibung

Die Erfindung betrifft die Verwendung eines Prozessgases zum Laserschweißen mit einem auf ein zu schweißendes Werkstück fokussierten Laserstrahl, wobei das Prozessgas gegen die Werkstückoberfläche geleitet wird.

Die Eigenschaften der Laserstrahlung, insbesondere die Intensität und gute Fokussierbarkeit, haben dazu geführt, dass Laser heute in vielen Gebieten der Materialbearbeitung zum Einsatz kommen. Die Laserbearbeitungsanlagen sind an sich bekannt. In der Regel weisen sie einen Laserbearbeitungskopf, gegebenenfalls mit einer zum Laserstrahl koaxial angeordneten Düse auf. Oftmals werden Laserbearbeitungsanlagen in Verbindung mit einer CNC-Steuerung eingesetzt.

Unter einem fokussierten Laserstrahl wird im Rahmen der Erfindung ein im wesentlichen auf die Werkstückoberfläche fokussierter Laserstrahl verstanden. Außer bei der überwiegend eingesetzten Methode mit auf die Werkstückoberfläche fokussierter Laserstrahlung kann die Erfindung auch bei der selten benutzten Variante mit nicht exakt auf die Werkstückoberfläche fokussierter Strahlung angewandt werden.

Bei vielen Verfahren der Lasermaterialbearbeitung wird metallisches und/oder sonstiges Material auf Temperaturen erhitzt, bei denen eine Reaktion mit den einhüllenden Gasen stattfindet. In vielen Fällen werden daher technische Gase eingesetzt, um diese Materialbearbeitungsprozesse effektiver, schneller und/oder mit verbesserter Qualität durchführen zu können.

Die US 3824368 beinhaltet ein Verfahren zum Laserstrahlschweißen, bei welchem ein Gas parallel zu Werkstückoberfläche an die Bearbeitungsstelle geleitet wird, um die Ionisation zu unterbinden. Als Gas wird Helium oder Mischung aus Helium mit Stickstoff, Kohlendioxid, Sauerstoff oder ähnlichen Gasen vorgeschlagen.

Die EP 579 205 beinhaltet eine Prozessgasmischung zum Laserstrahlschweißen, welche 5 bis 35 % Sauerstoff in Argon, Stickstoff oder Helium enthält. Anstelle des Sauerstoffs kann auch trockene Luft verwendet werden. Der Anteil an trockener Luft darf dabei 25 % nicht unterschreiten. Eine Zugabe von Sauerstoff in Stickstoff und/oder Helium zum Laserschweißen von beschichteten Belchen beinhaltet auch die EP 527229.

Helium oder Mischungen aus Helium mit Wasserstoff, Sauerstoff, Kohlendioxid und weiteren elektronegativen Gasen zur Verbesserung der Eindringtiefe beim Laserschweißen beinhaltet die US 3939323.

Beim Laserschweißen erfüllen Prozessgase verschiedene Aufgaben. Die Kontrolle und Reduzierung des Plasmas ist bei hohen Laserleistungen zwingend. Dies ist beispielsweise aus der Veröffentlichung "Laser im Nebel", Dr. W. Danzer und Klaus Behler, Zeitschrift LASER, Ausgabe 1/87, Seiten 32 bis 36, bekannt. Andere Aufgaben wie der Schutz vor Oxidation, eine metallurgische Optimierung und/oder eine Maximierung der Geschwindigkeit und der Qualität (Spritzer, Poren, Nahtqualität) werden bislang vernachlässigt.

Beim Laserschweißen ist es bekannt, inerte Schutzgase wie Helium oder Argon einzusetzen. Auch Stickstoff wird teilweise verwendet. Vereinzelt werden auch Beimengungen von Kohlendioxid, Sauerstoff oder Wasserstoff zu Argon oder Stickstoff gemischt.

Der Erfindung lag daher die Aufgabe zugrunde, eine Verwendung eines Prozessgas der eingangs genannten Art aufzuzeigen, welche ein verbessertes Laserschweißen ermöglichen. Insbesondere sollten mit Hilfe des Prozessgases auch neben der Kontrolle und Reduzierung des Plasmas ein Schutz vor Oxidation, eine metallurgische Optimierung und/oder eine Maximierung der Geschwindigkeit und der Qualität erreicht werden.

Diese Aufgabe wird erfindungsgemäß durch Verwendung eines Prozessgases gemäß Anspruch 1 gelöst.

Wesentlich ist für die Erfindung, dass das Prozessgas neben einem Inertgasanteil auch einen Aktivgasanteil aufweist.

Es hat sich in Versuchen gezeigt, dass sogar bereits ein relativ niedriger Anteil an Helium in der Größenordnung von etwa 25 Vol.-% (z.B. ± 10 %) in der Regel für eine wirksame Plasmakontrolle ausreicht. Der genaue Prozentsatz für den Heliumanteil ist von verschiedenen Faktoren wie beispielsweise der Laserleistung, der Energiedichte, der Materialart, der Menge an verdampftem Material, der Schutzgasmenge, der Art der Gaszufuhr zum Schweißprozess etc. abhängig. Die Anpassung der Gaszusammensetzung vor dem Hintergrund dieser Einflußfaktoren stellt für den Fachmann keinerlei Schwierigkeit dar.

In Weiterbildung der Erfindung enthält das Prozessgas bevorzugt zwischen 10 und 25 Vol.-% Kohlendioxid.

Versuche an verzinkten Blechen brachten sehr gute Ergebnisse mit einem Anteil von 10 bis 25 Vol.-% Kohlendioxid (z.B. 15 Vol.-% CO₂). Der erfindungsgemäße Kohlendioxidanteil führte zu wesentlich konstanteren Schweißergebnissen. Der Schweißprozess war wesentlich sicherer und gegen Verunreinigungen des Nahtbereichs unempfindlicher. Die Geschwindigkeit konnte teilweise merklich gesteigert werden.

In einer Ausführungsvariante enthält das Prozessgas Sauerstoff mit einem Anteil von mehr als 10 Vol.-% Sauerstoff, vorzugsweise zwischen 15 und 25 Vol.-% Sauerstoff. Das Prozessgas dieser Ausgestaltung sorgt insbesondere für eine deutliche Erhöhung der Schweißgeschwindigkeit.

In einer anderen Variante enthält das Prozessgas zwischen 0,1 und 20 Vol.-% Sauerstoff, vorzugsweise zwischen 0,5 und 10 Vol.-% Sauerstoff. In dieser Ausgestaltungsvariante ist der Aspekt des Schutzes des Werkstücks vor Oxidation besonders ausgeprägt.

In Ausbildung der Erfindung, eignen sich für das Laserschweißen Prozessgase, welche 0 bis 40 Vol.-% (insbesondere 0 bis 25 Vol.-%, vorzugsweise 0 bis 20 Vol.-%, besonders bevorzugt 0 bis 15 Vol.-%) Argon enthalten.

Helium dient dabei der Plasmaunterdrückung bzw. -kontrolle. Kohlendioxid unterstützt den Schmelzfluß. Die Sauerstoffbeigabe kann am Schweißprozess mehrere bestimmte positive Effekte hervorrufen und zur Qualitätssteigerung beitragen. Stickstoff wie auch Argon erhöhen die Abdeckung der Schweißzone. Stickstoff und Argon erfüllen auch zumindest teilweise die Aufgabe des Heliums und tragen daher als preisgünstiger Ersatz des Inertgases Helium zur Wirtschaftlichkeit des Laserschweißens bei.

Die Erfindung kann im Zusammenhang mit allen Arten von Lasern zur Anwendung kommen. Vor allem eignet sie sich für den Einsatz bei der Laserbearbeitung mit Nd-YAG-Laser, Dioden-Laser und CO₂-Laser.

Mit dem erfindungsgemäßen Prozessgas können insbesondere mit Vorteil niedriglegierte Stähle und beschichtete, insbesondere verzinkte Stähle geschweißt werden.

## Patentansprüche

1. Verwendung eines Prozessgases zum Laserschweißen mit einem auf ein zu schweißendes Werkstück fokussierten Laserstrahl, wobei das Prozessgas gegen die Werkstückoberfläche geleitet wird, **dadurch gekennzeichnet, dass** das Prozessgas aus einem
• ternären Gasgemisch mit den Komponenten Helium, Stickstoff und Kohlendioxid,
• quaternären Gasgemisch mit den Komponenten Helium, Stickstoff, Kohlendioxid und Sauerstoff, wobei der Sauerstoff mit einem Anteil von bis zu 30 Vol.-% enthalten ist,
• quaternären Gasgemisch mit den Komponenten Helium, Stickstoff, Argon und Kohlendioxid
oder
• quintemären Gasgemisch mit den Komponenten Helium, Stickstoff, Argon, Kohlendioxid und Sauerstoff, wobei der Sauerstoff mit einem Anteil von bis zu 30 Vol.-% enthalten ist,
besteht,
wobei das Prozessgas zwischen 15 und 50 Vol.-% Helium und Kohlendioxid mit einem Anteil von 5 bis zu 25 Vol.-% enthält.

2. Verwendung eines Prozessgases nach Anspruch 1, **dadurch gekennzeichnet, dass** das Prozessgas mehr als 10 Vol.-% Sauerstoff, vorzugsweise zwischen 15 und 25 Vol.-% Sauerstoff enthält.

3. Verwendung eines Prozessgases nach Anspruch 1 oder 2, **dadurch gekennzeichnet, dass** das Prozessgas zwischen 0,1 und 20 Vol.-% Sauerstoff, vorzugsweise zwischen 0,5 und 10 Vol.-% Sauerstoff enthält.

4. Verwendung eines Prozessgases nach einem der Ansprüche 1 bis 3, **dadurch gekennzeichnet, dass** das Prozessgas 0 bis 40 Vol.-% Argon enthält.

5. Verwendung eines Prozessgases nach einem der Ansprüche 1 bis 3 für das Laserschweißen niedriglegierter Stähle und/oder beschichteter, insbesondere verzinkter Stähle.

## Claims

1. Use of a process gas for laser welding with a laser beam focused on a workpiece to be welded, the process gas being led towards the workpiece surface, **characterized in that** the process gas is composed of
• a ternary gas mixture having the components helium, nitrogen and carbon dioxide,
• a quaternary gas mixture having the components helium, nitrogen, carbon dioxide and oxygen, the proportion of oxygen contained being up to 30% by volume,
• a quaternary gas mixture having the components helium, nitrogen, argon and carbon dioxide
or
• a quinternary gas mixture having the components helium, nitrogen, argon, carbon dioxide and oxygen, the proportion of oxygen contained being up to 30% by volume,
the process gas containing between 15 and 50% by volume of helium and carbon dioxide with a proportion from 5 to 25% by volume.

2. Use of a process gas according to Claim 1, **characterized in that** the process gas contains more than 10% by volume of oxygen, preferably between 15 and 25% by volume of oxygen.

3. Use of a process gas according to Claim 1 or 2, **characterized in that** the process gas contains between 0.1 and 20% by volume of oxygen, preferably between 0.5 and 10% by volume of oxygen.

4. Use of a process gas according to one of Claims 1 to 3, **characterized in that** the process gas contains 0 to 40% by volume of argon.

5. Use of a process gas according to one of Claims 1 to 3 for the laser welding of low-alloy steels and/or coated, in particular galvanized, steels.

## Revendications

1. Utilisation d'un gaz de processus pour le soudage laser avec un faisceau laser focalisé sur une pièce à souder, dans laquelle le gaz de processus est conduit contre la surface de la pièce, **caractérisée en ce que** le gaz de processus se compose
• d'un mélange gazeux ternaire avec les composants hélium, azote et dioxyde de carbone,
• d'un mélange gazeux quaternaire avec les composants hélium, azote, dioxyde de carbone et oxygène, l'oxygène étant contenu avec une proportion pouvant atteindre 30 % en volume,
• un mélange gazeux quaternaire avec les composants hélium, azote, argon et dioxyde de carbone,
ou
• un mélange gazeux quinternaire avec les composants hélium, azote, argon, dioxyde de carbone et oxygène, l'oxygène étant contenu avec une proportion pouvant atteindre 30 % en volume,
dans laquelle le gaz de processus contient entre 15 et 50 % en volume d'hélium et du dioxyde de carbone en une proportion de 5 à 25 % en volume.

2. Utilisation d'un gaz de processus selon la revendication 1, **caractérisée en ce que** le gaz de processus contient plus de 10 % en volume d'oxygène, de préférence entre 15 et 25 % en volume d'oxygène.

3. Utilisation d'un gaz de processus selon la revendication 1 ou 2, **caractérisée en ce que** le gaz de processus contient entre 0,1 et 20 % en volume d'oxygène, de préférence entre 0,5 et 10 % en volume d'oxygène.

4. Utilisation d'un gaz de processus selon l'une quelconque des revendications 1 à 3, **caractérisée en ce que** le gaz de processus contient de 0 à 40 % en volume d'argon.

5. Utilisation d'un gaz de processus selon l'une quelconque des revendications 1 à 3 pour le soudage laser d'acier faiblement alliés et/ou d'aciers revêtus, en particulier galvanisés.
